# EUROPEAN PATENT APPLICATION

(11) **EP 2 525 317 A1**
(43) Date of publication of application: **21.11.2012**
(21) Application number: 11305602.2
(22) Date of filing: 18.05.2011
(51) Int. Cl.: G06Q 20/00, G07F 19/00

(54) **Method and apparatus for conducting a payment transaction**

(71) Applicant: Alcatel Lucent, 75007 Paris (FR)
(72) Inventor: Van Herreweghe, Hans, 2520 Oelegem (BE); Van den Broeck, Marc, 2860 Sint-Katelijne-Waver (BE)
(74) Representative: D'Halleweyn, Nele Veerle Trees Gertrudis

(57) **Abstract**

A method for conducting a payment between a first mobile terminal attached to a first mobile network and a second mobile terminal, said method comprising at said first mobile terminal: capturing information pertaining to a payment amount via a user interface comprised in said first mobile terminal; registering a transaction for the payment amount with a clearing entity via said first mobile network; and displaying a visually encoded symbol comprising said information pertaining to said payment amount and information confirming said registering with said clearing entity via a display comprised in said first mobile terminal.

## Description

### Field of the Invention

The present invention pertains to the field of electronic payments.

### Background

To avoid the safety issues and the hassle associated with exchanging precious metals or other forms of cash money, many forms of non-cash money transactions have been devised over the past centuries. Recently, with the advent of ubiquitous portable electronic devices such as mobile phones and PDAs, it has been attempted to introduce mobile payments. Known mobile payment schemes are suitable for transferring money from a consumer to a merchant, but not for transferring money between consumers.

### Summary

It is an object of the present invention to provide a mobile payment scheme suitable for transferring money between consumers.

According to a first aspect of the invention, there is provided a method for conducting a payment between a first mobile terminal attached to a first mobile network and a second mobile terminal, said method comprising at said first mobile terminal: capturing information pertaining to a payment amount via a user interface comprised in said first mobile terminal; registering a transaction for the payment amount with a clearing entity via said first mobile network; and displaying a visually encoded symbol comprising said information pertaining to said payment amount and information confirming said registering with said clearing entity via a display comprised in said first mobile terminal.

In an embodiment, the method according to the present invention further comprises authenticating a user of said first mobile terminal prior to said displaying.

In an embodiment of the method of the present invention, said information confirming said registering with said clearing house comprises an encrypted message generated by said clearing entity.

In an embodiment of the method of the present invention, said visually encoded symbol is a QR code.

This embodiment has the advantage of using a highly standardized type of code, for which detection software is readily available on a variety of mobile operating systems. QR codes are specified in BS ISO/IEC 18004:2006.

In an embodiment of the method of the present invention, said visually encoded symbol is an Aztec code.

In an embodiment, the method according to the present invention further comprises capturing information pertaining to a payee via said user interface; wherein said visually encoded symbol comprises said information pertaining to said payee.

According to an aspect of the present invention, there is provided a method for conducting a payment between a first mobile terminal and a second mobile terminal attached to a second mobile network, said method comprising at said second terminal: capturing a visually encoded symbol generated by the method as described above with a camera comprised in said second mobile terminal; displaying said captured visually encoded symbol on a screen comprised in said second mobile terminal, for recapturing by an automated teller machine; receiving an authentication request from a payment authorization agent via said second mobile network; and registering a response to said authentication request.

In an embodiment of the method according to the present invention, said registering of said response is carried out via a user interface integrated in said second mobile device, said response being transmitted to said payment authorization agent via said second mobile network.

In an embodiment of the method according to the present invention, said registering of said response is carried out via a user interface integrated in said automated teller machine.

According to an aspect of the present invention, there is provided a computer program configured to cause a processor to perform the method of any of the preceding claims.

According to an aspect of the present invention, there is provided an apparatus configured to perform the method as described above as a first mobile terminal, the apparatus comprising: a user interface for capturing information pertaining to a payment amount; a mobile network interface for registering a transaction for the payment amount with a clearing entity; and a display for displaying a visually encoded symbol comprising said information pertaining to said payment amount and information confirming said registering with said clearing entity.

According to an aspect of the present invention, there is provided an apparatus configured to perform the method as described above as a second mobile terminal, the apparatus comprising: a camera for capturing a visually encoded symbol generated by the method according to the method described above; a display for displaying said captured visually encoded symbol, for recapturing by an automated teller machine; and a mobile network interface for receiving an authentication request from a payment authorization agent via said second mobile network.

In an embodiment, the apparatus according to the present invention further comprises means for registering a response to said authentication request.

### Brief Description of the Figures

Some embodiments of apparatus and/or methods in accordance with embodiments of the present invention are now described, by way of example only, and with reference to the accompanying drawings, in which:
Figure 1 presents an interaction chart of the actors participating in a payment scheme according to present invention;
Figure 2 presents a flow chart of a method according to the invention, pertaining to a first mobile terminal;
Figure 3 presents a flow chart of a method according to the invention, pertaining to a second mobile terminal;
Figure 4 provides a block diagram of a first mobile terminal according to an embodiment of the present invention; and
Figure 5 provides a block diagram of a second mobile terminal according to an embodiment of the present invention.

### Description of Embodiments

Whereas the known mobile payments schemes mimic or imply a giro transfer, i.e. a payment transfer from one bank account (or a mobile service account) to another bank account, initiated by the payer, the scheme according to the present invention is more akin to a cheque.

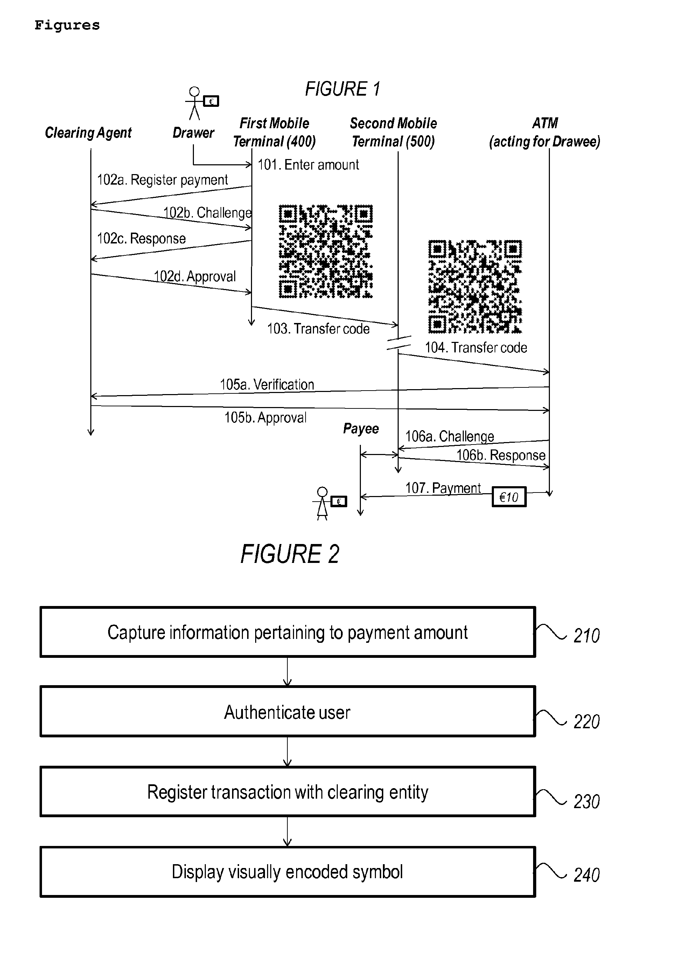

Figure 1 presents an interaction chart of the actors participating in a payment scheme according to the present invention. The different actions taken by the participants are shown in a chronological order from the top to the bottom of the figure. The main participants in the transaction are the drawer of payer and the payee, both of whom are assumed to be consumers disposing of a mobile device such as a camera phone, a PDA or a tablet computer. The terminal of the drawer is designated as the first mobile terminal **400** and the terminal of the payee is designated as the second mobile terminal **500.**

In the illustrated scenario, drawer wishes to make a person to person payment for a particular amount to the payee. Without loss of generality the amount may be hypothetically set to € 10.

In order to start the transaction, the drawer first enters the amount of the transaction **101** into his terminal **400.** The terminal **400** acting according to the present invention will contact a clearing agent such as a bank or the mobile phone company in step **102a** to register the requested payment. The contact between the drawer's device **400** and the clearing agent preferably happens through the mobile network. The clearing agent will only authorize the payment if the drawer has sufficient funds or sufficient credits outstanding with the clearing agent. Additionally the clearing agent may require the drawer to authenticate prior to approving the transaction. The authentication process is illustrated, without loss of generality, as a challenge-response process represented here by the challenge sent from the clearing agent to the drawer's terminal **400** in step **102b,** the response sent back from the drawer's terminal **400** to the clearing agent in step **102c** and the approval sent from the clearing agent to the drawer's terminal **400** in step **102d** if the authentication is successful and if any applicable solvency criteria are met.

The approval is preferably sent in a form that makes it inherently difficult to forge. An example of such a form is a message signed by the clearing agent using a private key known only to the clearing agent such that the signature on the message may be verified by means of a generally available and certified public key. This message with the accompanying signature may be sent to the drawer's terminal **400** in the form of digital data as such or it may be precoded by the clearing agent or by an intermediate agent in the form of a visually encoded symbol. In the latter case the drawer's device **400** need only display a symbol, in the former case the drawer's device **400** will have to generate the symbol on the basis of the received digital data. It will be appreciated by a person skilled in the art of cryptography that a similar difficult to forge approval message may be obtained in a variety of ways employing public key encryption or symmetric encryption.

Once the visually encoded signal representing the clearing agent's approval has been received or generated at the device of the drawer **400,** the drawer will cause his device **400** to display the visually displayed symbol such that he may be captured by the payee's mobile terminal **500.** This display and capture sequence is illustrated in Figure 1 as the transfer of the code in step **103.**

The payee now holds a copy of the clearing agent's approval in his mobile device **500.** This device **500** may either store the graphical signal as such or it may store the digital message represented by the graphical symbol. Either way, the payee's device **500** will be able to reproduce the visually encoded symbol at will. The payee's copy of the visually encoded symbol is the electronic equivalent of a cheque. At any point in time during the validity of the cheque, a validity which may be optionally encoded in the visually encoded symbol itself, the payee may present the visually encoded symbol to a payment agent of the drawee.

For clarity purposes, the transaction is illustrated as being carried out with an automated teller machine (ATM) in Figure 1. This of course is an exemplary set-up without loss of generality. Any other type of device configured to dispense cash or goods on behalf of the drawee can take the place of the ATM.

At the time of the payee's choosing, the payee presents the visually encoded symbol as a graphic on the display of the device **500** to the drawee, allowing the latter to capture the symbol using camera means. This display and capture sequence is again illustrated as a transfer of the code in step **104.**

In practice this transfer may consist of the payee holding his device **500** displaying the visually encoded symbol up to the camera of an ATM allowing this camera to capture the symbol and to decode its contents. The ATM acting according to the present invention will then contact the clearing agent for verification of the validity of the cheque in step **105a** and receive approval **105b** if the validity is confirmed and the cheque has neither expired nor been paid out previously.

The ATM may optionally authenticate the payee prior to presenting cash for the cheque. Without loss of generality, this authentication process is illustrated as a challenge-response process in which the drawee sends a challenge to the payee in step **106a** and the payee responds with an appropriate response in step **106b.** If authentication is successful, the drawee will provide the specified amount of cash to the payee. If the cheque is made out to a particular person, the authentication step becomes necessary to ensure that cash payment is only made to the designated payee.

The challenge-response exchange may be conducted at the user interface of the ATM, i.e. the challenge may be displayed on the ATM's display and the response which may consist of a pin code may be captured at the ATM's key pad, but alternatively the payee's mobile device **500** may play a role in the challenge-response sequence. The challenge and/or the response may be transferred between the payee and the drawee via the payee's mobile device **500** instead of via the ATM's user interface. This provides an additional form of authentication in a sense that only the holder of the appropriate mobile device **500** will be able to participate in this authentication sequence.

Figure 2 presents a flow chart of a method according to the invention pertaining to the first mobile terminal **400,** i.e. the terminal of the drawer of the previous figure. In a first step **210** the terminal **400** captures information pertaining to the payment amount for which the cheque is to be generated. In the same step, the device may optionally also capturing information about the period of validity of the cheque and/or the identity of the authorized payee.

In an optional second step **220,** the apparatus **400** will authenticate the user for instance by requesting a pin code engaging in a challenge response authentication sequence capturing a biometric property of the user or any other authentication means known in the art.

In another step **230** which may occur concurrently or sequentially with step **220,** the apparatus **400** registers a transaction with the clearing entity in order to make sure that the cheque is generated on a basis of a sound financial backing. When the optional authentication **220** and the registration **230** have been successfully completed, the apparatus **400** will display the visually encoded symbol in step **240** such that it may be captured by the device **500** of the payee.

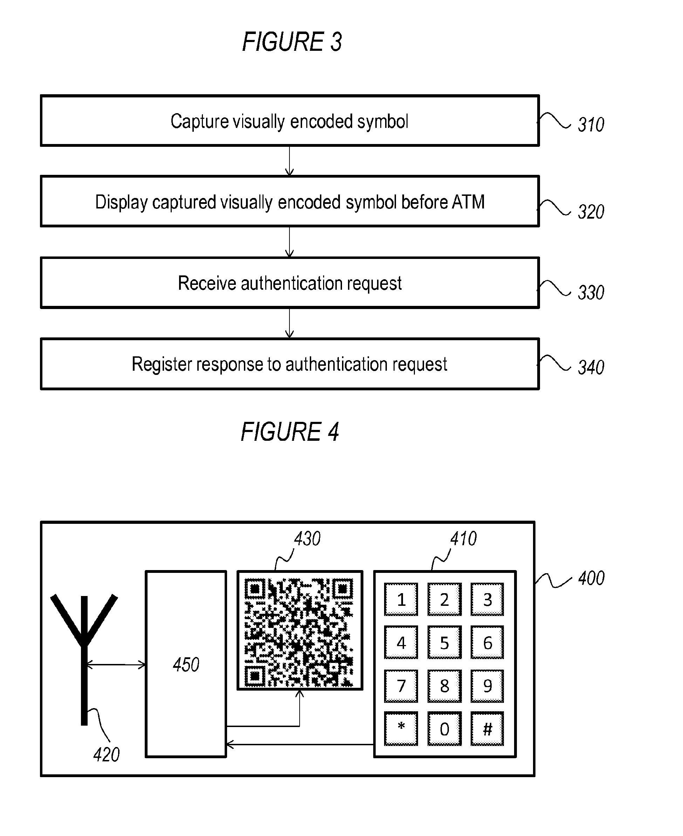

Turning to the apparatus of the payee, Figure 3 presents a flow chart of a method according to the invention pertaining to the second mobile terminal **500.** In a first step **310** the apparatus **500** captures the visually encoded symbol as displayed by the device of the drawer **400.** Once the apparatus **500** disposes of its copy of the visually encoded symbol either in graphical or in fully digital form, it is enabled to display said symbol before the camera of an agent of the drawee, such as an ATM, in step **320.** The agent of the drawee may proceed to conducting an authentication of the payee which, as explained before, may involve an interaction with the payee's mobile terminal **500.** In that case, the apparatus **500** of the payee will receive an authentication request in step **330.** Subsequent to this request, the apparatus of the payee will attempt to register a response to the authentication request in step **340** via the user interface of the apparatus. If a response to the authentication request is registered at the apparatus **500** the apparatus **500** will then transmit it to the drawee, for instance by displaying the response in a graphically encoded symbol such that it may be captured by the camera of the drawee or by transmitting it over the mobile network to the clearing agent who in term will forward it to the drawee via the financial data network infrastructure.

Figure 4 provides additional detail of the mobile terminal **400** such as one used by the drawer. The mobile terminal **400** comprises a user interface **410** for capturing information pertaining to the payment amount and optionally information pertaining to the authorized payee and/or the period of validity of the check to be generated. It further comprises a mobile network interface schematically illustrated as an antenna symbol **420** for registering a transaction for the payment amount with a clearing entity. The skilled person will understand that the mobile network interface comprises a combination of hardware and software components allowing high level communication over a mobile network infrastructure. The mobile terminal **400** further comprises a display **430** for displaying a visually encoded symbol comprising information pertaining to the payment amount and information confirming the registration with the clearing entity. Display **430** is illustrated for exemplary purposes only as showing a particular QR code. The mobile terminal **400** is further shown to comprise a processing device **450** capable of executing the necessary steps to allow the apparatus **400** to operate according to the invention.

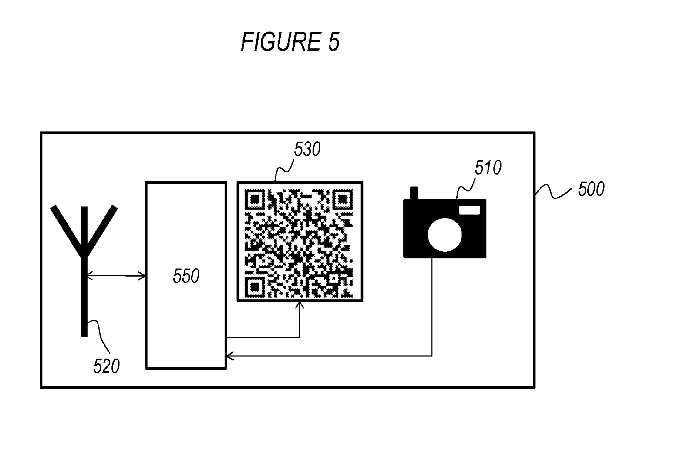

Figure 5 illustrates a second mobile terminal **500** according to an embodiment of the invention comprising a camera **510** for capturing visually encoded symbol generated by the method and apparatus described before, a mobile network interface **520** for receiving an authentication request from a payment authorization agent via the mobile network and a display **530** for the visually encoded symbol which again, for exemplary purposes only, is illustrated as a particular QR code. The apparatus **500** is also illustrated as comprising a processing agent **550** configured to allow the terminal **500** to carry out the steps of the method according to the present invention.

In the embodiments described hereinabove, both the first mobile terminal **400,** operated by the drawer, and the second mobile terminal **500,** operated by the payee, has been described as communicating with their respective correspondence via a mobile network. It shall be clear to the skilled person that these communications may take place over the same mobile network or over several different mobile networks. More in particular, it is not necessary that the first mobile terminal **400** and the second mobile terminal **500** communicate with each other over a mobile network as the present invention requires only transfers of visually encoded information for which the use of display means and camera means suffices. The communications that do take place via the mobile network are preferably conducted via a packet based network interface such as a 3G mobile network.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for conducting a payment between a first mobile terminal attached to a first mobile network and a second mobile terminal, said method comprising at said first mobile terminal:
- capturing information pertaining to a payment amount via a user interface comprised in said first mobile terminal;
- registering a transaction for the payment amount with a clearing entity via said first mobile network; and
- displaying a visually encoded symbol comprising said information pertaining to said payment amount and information confirming said registering with said clearing entity via a display comprised in said first mobile terminal.

2. The method of claim 1, further comprising authenticating a user of said first mobile terminal prior to said displaying.

3. The method of claim 1 or claim 2, wherein said information confirming said registering with said clearing house comprises an encrypted message generated by said clearing entity.

4. The method of any of the preceding claims, wherein said visually encoded symbol is a QR code.

5. The method according to any of claims 1-3, wherein said visually encoded symbol is an Aztec code.

6. The method of any of the preceding claims, further comprising capturing information pertaining to a payee via said user interface; wherein said visually encoded symbol comprises said information pertaining to said payee.

7. A method for conducting a payment between a first mobile terminal and a second mobile terminal attached to a second mobile network, said method comprising at said second terminal:
- capturing a visually encoded symbol generated by the method according to claim 6 with a camera comprised in said second mobile terminal;
- displaying said captured visually encoded symbol on a screen comprised in said second mobile terminal, for recapturing by an automated teller machine;
- receiving an authentication request from a payment authorization agent via said second mobile network; and
- registering a response to said authentication request.

8. The method according to claim 5, wherein said registering of said response is carried out via a user interface integrated in said second mobile device, said response being transmitted to said payment authorization agent via said second mobile network.

9. The method according to claim 5, wherein said registering of said response is carried out via a user interface integrated in said automated teller machine.

10. A computer program configured to cause a processor to perform the method of any of the preceding claims.

11. An apparatus configured to perform the method as a first mobile terminal according to any of claims 1-6, the apparatus comprising:
- a user interface for capturing information pertaining to a payment amount;
- a mobile network interface for registering a transaction for the payment amount with a clearing entity; and
- a display for displaying a visually encoded symbol comprising said information pertaining to said payment amount and information confirming said registering with said clearing entity.

12. An apparatus configured to perform the method as a second mobile terminal according to any of claims 7-9, the apparatus comprising:
- a camera for capturing a visually encoded symbol generated by the method according to claim 6;
- a display for displaying said captured visually encoded symbol, for recapturing by an automated teller machine; and
- a mobile network interface for receiving an authentication request from clearing entity via said second mobile network.

13. The apparatus of claim 12, further comprising means for registering a response to said authentication request.
